# EUROPÄISCHE PATENTSCHRIFT

(11) **EP 1 916 137 B1**
(45) Veröffentlichungstag und Bekanntmachung des Hinweises auf die Patenterteilung: **19.01.2011**
(21) Anmeldenummer: 07018443.7
(22) Anmeldetag: 20.09.2007
(51) Int. Cl.: B60J 7/06, B60J 5/06

(54) **Fahrzeugaufbau**
Vehicle superstructure
Structure de véhicule

(30) Priorität: 26.09.2006 DE 202006014886 U
(43) Veröffentlichungstag der Anmeldung: 30.04.2008
(60) Teilanmeldung: 10008079.5
(73) Patentinhaber: REHAU AG + Co, 95111 Rehau (DE)
(72) Erfinder: Schwarz, Michael, 95100 Selb (DE); Goldstein, Jörg, 95028 Hof (DE)

(56) Entgegenhaltungen:
- EP-A- 0 292 098
- EP-A- 0 736 404
- EP-A- 1 502 789
- DE-U1- 20 216 370
- GB-A- 2 123 466
- US-A- 4 828 316

## Beschreibung

Die Erfindung betrifft einen Fahrzeugaufbau mit in Fahrzeuglängsrichtung verschieblichen Wandungen, insbesondere als Planen und dergleichen ausgebildeten Längsseitenwandungen, die an aus einem Hohlprofil und an dieses angeschlossenen Laufschienenprofilen, sowie an dieses angeordneten Dichtelementen gebildeten oberen Längsgurten des Fahrzeugaufbaus angeordnet sind, wobei wenigstens ein in Bezug auf die Fahrzeugmitte außen liegender Bereich des Längsgurtes wenigstens eine schlitzförmig geöffnete Längsausnehmung aufweist.

Derartige Fahrzeugaufbauten, insbesondere für Nutzfahrzeuge, sind in vielen Fällen mit beweglichen Seitenwandungen versehen, um das Be- und Entladen entsprechend zu erleichtern. Dabei können die beweglichen Seitenwandungen im einfachen Falle durch beispielsweise Planen gebildet sein, die in Fahrzeuglängsrichtung verschieblich an den oberen Längsgurten des Rahmens des Fahrzeugaufbaus aufgehängt sind. Es ist jedoch auch möglich, dass die Seitenwandungen durch starre, gleichfalls in Fahrzeuglängsrichtung verschieblich an den oberen Längsgurten des Fahrzeugaufbaus aufgehängte Seitenrungen gebildet sind. Beide Möglichkeiten der Seitenwandungen können auch jeweils nachträglich an dem entsprechenden Fahrzeug angebracht werden.
Ferner wird bei Nutzfahrzeugen dieser Art häufig der Aufbau insbesondere des Daches ebenfalls in Fahrzeuglängsrichtung verschiebbar gestaltet, so dass auch eine Beladung des Fahrzeuges von oben her über diese Öffnungen möglich ist.
Der Rahmen des Fahrzeugaufbaus muss daher so gestaltet sein, dass jede der vorgenannten Wandungsarten bzw. auch ein bewegliches bzw. starres Dach sicher und dicht angebracht werden kann. Die Längsgurte des Fahrzeugaufbaues sind trotz einer zu überspannenden Pritschenlänge von ca. 13 m in der erforderlichen Starrheit und Tragfähigkeit, aber mit einem möglichst geringen Gewicht zur Verfügung zu stellen, um die Nutzlast des Fahrzeuges nicht negativ zu beeinträchtigen.

In der DE 3929425 A1 wird ein gattungsgemäßer Fahrzeugaufbau beschrieben, mit in Fahrzeuglängsrichtung verschieblichen Wandungen, insbesondere als Schieberungen oder Planen ausgebildeten Längsseitenwandungen, die an aus einem zentralen Hohlprofil und an dieses angeschlossenen Laufschienenprofilen sowie an dieses angeschlossenen Dichtprofilen gebildeten oberen Längsgurten des Fahrzeugaufbaues aufgehängt sind. Dieser Fahrzeugaufbau ist dadurch gekennzeichnet, dass der obere Längsgurt des Rahmens des Fahrzeugaufbaus durch ein einteiliges fortlaufendes Ziehprofil gebildet ist, welches einen oben und außen liegend angeordneten, im Wesentlichen ein rechteckiges Querschnittprofil aufweisenden, Hohlträger und eine Vielzahl an diesen angeschlossener, zur Bildung von Lauf- oder Führungsschienen dienender, vertikal gerichteter Profilstege umfasst.
Der Fahrzeugaufbau nach dem Stand der Technik ist weiterhin dadurch gekennzeichnet, dass der in Bezug auf die Fahrzeugmitte außen liegende Profilsteg mit einer nach außen vorspringenden Wulst versehen ist, die ihrerseits mit einer schlitzförmig geöffneten Längsausnehmung versehen ist, in der über einen Randwulst eine streifenförmige Abdichtung für die Aufhängung der längs verschieblichen Seitenwandung des Fahrzeugaufbaus aufgehängt ist.
Bei diesem gattungsgemäßen Fahrzeugaufbau ist es erforderlich, das Dichtelement in die schlitzförmig geöffnete Längsausnehmung einzuführen und über die gesamte Länge von ca. 13 m in den Längsgurt einzuziehen. Dies wird im Allgemeinen mit beispielsweise Seilwinden realisiert, wobei bei der Montage derartiger Fahrzeugaufbauten sich das Dichtelement an der oberen Kante des Fahrzeugaufbaus in einer Höhe von ca. 4 m befindet und die Montage mit einem Kran sehr aufwändig und nur mit hohem Kraftaufwand nur möglich ist.
Weiterhin nachteilig bei dem bekannten Stand der Technik wird gesehen, dass das Einziehen des Dichtelementes über die gesamte Länge des Fahrzeugaufbaus mit einem hohen Kraftaufwand verbunden ist, wobei gleichzeitig das Dichtelement selbst einer gewissen Schädigung bzw. Beeinträchtigung ausgesetzt ist.
Ein weiterer Nachteil besteht darin, dass ein einmal in den Längsgurt eingezogenes Dichtelement während der Montage des Fahrzeugaufbaues beschädigt werden kann, jedoch aufgrund des erhöhten zeitlichen sowie mechanischen Aufwandes später nicht mehr gewechselt wird. Dieser Nachteil betrifft auch bereits montierte Fahrzeugaufbauten, wo beispielsweise nach unsachgemäßer Be- bzw. Entladung oder auch nach Unfällen die Seitenwandung bzw. das Dichtelement beschädigt werden können und die Seitenwandung wechselbar ist, das Dichtelement jedoch nicht bzw. nur mit erhöhtem Aufwand. Der enorme finanzielle, zeitliche und technische Aufwand des Austausches des Dichtelementes verhindert letztlich selbiges.

Die EP 0736404 A beschreibt einen gattungsgemäßen Fahrzeugaufbau mit in Fahrzeuglängsrichtung verschieblichen Wandungen, insbesondere als Planen und dergleichen ausgebildeten Längsseitenwandungen, die an aus einem Hohlprofil und an dieses angeschlossenen Laufschienenprofilen sowie an diesen angeordneten Leiste (rub rail) gebildeten oberen Längsgurten des Fahrzeugaufbaus angeordnet sind, wobei wenigstens ein in Bezug auf die Fahrzeugmitte außen liegender Bereich des Längsgurtes wenigstens eine schwalbenschwanzförmig geöffnete Längsausnehmung aufweist.

Die EP 1502789A beschreibt ebenfalls einen Fahrzeugaufbau mit in Fahrzeuglängsrichtung verschieblichen Wandungen, insbesondere als Planen und dergleichen ausgebildeten Längsseitenwandungen, die an aus einem Hohlprofil und an dieses angeschlossenen Laufschienenprofilen sowie an diesen angeordneten Vorhangleiste (pelmet) gebildeten oberen Längsgurten des Fahrzeugaufbaus angeordnet sind, wobei wenigstens ein in Bezug auf die Fahrzeugmitte außen liegender Bereich des Längsgurtes wenigstens eine schlitzförmig geöffnete Längsausnehmung aufweist.

Der gattungsgemäße Fahrzeugaufbau weist jedoch noch einen weiteren Nachteil auf, der darin besteht, dass durch das Einziehen des Dichtelementes über die gesamte Länge des Fahrzeugaufbaues dieses nicht voll an den Längsseitenwandungen anliegt und somit nicht komplett abdichtet.
Weiterhin nachteilig wird gesehen, dass das Dichtelement, bedingt durch die mechanische Belastung bei der Montage, aber auch durch mögliche thermische Belastungen während des Einsatzes faltig bzw. porös und so die Dichtfunktion nicht mehr voll umfänglich realisiert bzw. gänzlich unmöglich wird.

Hier setzt die Erfindung ein, die sich die Aufgabe gestellt hat, die Nachteile des bekannten Standes der Technik zu überwinden, und einen Fahrzeugaufbau aufzuzeigen, der kostengünstig und wirtschaftlich herstellbar ist, der in einheitlicher Ausführung wahlweise mit Seitenplanen oder Seitenrungen sowie mit einem starren oder verschieblichen Dach voll; umfänglich abgedichtet ausgestattet werden kann, und bei dem ein Dichtelement unter konstanter Kraft, die Seitenplanen bzw. Seitenrungen sowie die starren oder verschieblichen Dächer abdichtend, auch nachträglich montierbar ist.

Erfindungsgemäß wird dies durch die kennzeichnenden Merkmale des Anspruches 1 gelöst. Weitere vorteilhafte Ausgestaltungen sind in den Unteransprüchen beschrieben.

Der Fahrzeugaufbau mit in Fahrzeuglängsrichtung verschieblichen Wandungen, insbesondere als Planen und dergleichen ausgebildeten Längsseitenwandungen, die an aus einem Hohlprofil und an dieses angeschlossenen Laufschienenprofilen, sowie an dieses angeordneten Dichtelementen gebildeten oberen Längsgurten des Fahrzeugaufbaus angeordnet sind, wobei wenigstens ein in Bezug auf die Fahrzeugmitte außen liegender Bereich des Längsgurtes wenigstens eine schlitzförmig geöffnete Längsausnehmung aufweist, ist dadurch gekennzeichnet, dass das Dichtelement wenigstens abschnittsweise ein Halteelement aufweist, welches orthogonal zur Fahrzeuglängsrichtung kraftschlüssig in die Längsausnehmung eingebracht und das Dichtelement orthogonal lösbar am Längsgurt angeordnet ist.

Somit ist es bei dem erfindungsgemäßen Fahrzeugaufbau erstmals möglich, das Dichtelement nachträglich an einem bereits fertig montierten Fahrzeugaufbau sauber, abdichtend und fest anzubringen. Die Sichtfläche dieses Dichtelementes wird somit während der Montage des Fahrzeugaufbaus nicht beschädigt, während gleichzeitig eine extrem schnelle und kostengünstige Montage des Fahrzeugaufbaus an sich möglich ist.

Weiterhin vorteilhaft wird gesehen, dass das Halteelement an der dem Längsgurt gegenüberliegenden Seite des Dichtelementes angeordnet ist, so dass das Dichtelement in die kommunizierende Längsausnehmung des Längsgurtes problemlos einbringbar ist.

In einer weiteren vorteilhaften Ausgestaltung ist das Halteelement einstückig mit dem Dichtelement verbunden, was einerseits die Festigkeit und Stabilität positiv beeinflusst und andererseits auch die Herstellungskosten entsprechend reduziert.
In einer weiteren ebenfalls vorteilhaften Ausgestaltungsform ist das Halteelement stoffschlüssig mit dem Dichtelement verbunden, was beispielsweise durch eine an sich bekannte Verklebung möglich ist.
In einer ebenfalls vorteilhaften Ausgestaltungsform ist das Halteelement kraftschlüssig lösbar mit dem Dichtelement verbunden, was durch entsprechend in Wirkverbindung miteinander stehende Verrastungen realisierbar ist.

Ebenfalls vorteilhaft wird gesehen, dass das Halteelement in etwa einem rechten Winkel zum Dichtelement angeordnet ist, so dass die Montage in die gegenüberliegende Längsausnehmung des Längsgurtes schnell, einfach und sicher möglich ist.
Weiterhin vorteilhaft wird gesehen, dass das Halteelement in einem Winkel von etwa 1 bis 20°, vorzugsweise 1 bis 8° am Dichtelement angeordnet ist, welches insbesondere bei Anbringung an Längsgurten, bei denen starre oder verschiebliche Dächer einzubringen sind, vorteilhaft ist.
In einer weiteren vorteilhaften Ausgestaltung weist das Halteelement wenigstens ein Rastelement auf, welches so ausgebildet ist, dass das Dichtelement über das Halteelement kraftschlüssig mit der Längsausnehmung des Längsgurtes verbindbar ist. Die Dimensionierung des Rastelementes entspricht der zu verbauenden Länge des Dichtelementes sowie der durch das Dichtelement abzudeckenden Seitenplanen bzw. Seitenrungen.

In einer weiteren vorteilhaften Ausgestaltungsform weist das Halteelement wenigstens eine Hohlkammer auf, die so ausgebildet ist, dass das Dichtelement schnell und ohne Kraftaufwand in der Längsausnehmung des Längsgurtes einbringbar und dort fest abdichtend angeordnet ist.

Dies kann vorteilhafterweise auch dadurch erreicht werden, dass das Halteelement wenigstens zwei voneinander beabstandet angeordnete Rastelemente aufweist, wobei es im Rahmen der Erfindung liegt, dass diese zwei Rastelemente einstückig am Dichtelement angebracht sind bzw. auch als zwei unterschiedliche, voneinander getrennte bzw. unabhängige Rastelemente ausgebildet sind.

In einer weiteren vorteilhaften Ausgestaltungsform weist das Halteelement und/oder das Dichtelement wenigstens ein Verstärkungselement auf, so dass den Anforderungen an die Stabilität und Festigkeit des Fahrzeugaufbaus sowie den entsprechenden Normen Genüge getan werden kann.

Der erfindungsgemäße Fahrzeugaufbau zeichnet sich auch dadurch aus, dass das Dichtelement eine über seinen Querschnitt etwa konstante Wandstärke aufweist, so dass beispielsweise bei thermischen Belastungen keine Faltenbildung und damit eine Aufhebung der Dichtwirkung auftreten kann.

Weiterhin vorteilhaft wird gesehen, dass das Dichtelement in etwa eine konkave und/oder konvexe Außenkontur aufweist, so dass der erfindungsgemäße Fahrzeugaufbau, sei es an den Seitenplanen bzw. Seitenrungen, aber auch bei starren oder verschieblich angeordneten Dächern, jederzeit im Randbereich abgedichtet ist.

In einer weiteren vorteilhaften Ausbildung weist das Dichtelement wenigstens abschnittsweise ein Dekorelement auf.
Es hat sich als vorteilhaft herausgestellt, dass das Dekorelement auf der dem Halteelement gegenüberliegenden Seite des Dichtelementes angeordnet ist, so dass dies über die gesamte Breite bzw. Höhe des Fahrzeugaufbaues jederzeit problemlos sichtbar ist. Dieses Dekorelement, welches durch eine an sich bekannte Bedruckung, Lackierung, Folienkaschierung und dergleichen aufbringbar ist, ermöglicht neben einer zusätzlichen Werbefläche auf dem erfindungsgemäßen Fahrzeugaufbau aber auch, dass weitere zusätzliche Funktionen integrierbar sind.
In einer ebenfalls vorteilhaften Ausgestaltungsform ist das Dekorelement als Reflektorstreifen, Leuchtelement, fluoreszierendes Element und dergleichen ausgebildet, so dass bestehende bzw. zukünftige Sicherheitsanforderungen an einen Fahrzeugaufbau problemlos, kostengünstig und optisch wirksam realisierbar sind.

In einer vorteilhaften Ausgestaltung des erfindungsgemäßen Fahrzeugaufbaues ist das Dichtelement und/oder das Halteelement aus einem polymeren Werkstoff hergestellt. Hiermit lassen sich niedrige Herstellungskosten, die Farbenvielfalt sowie die geometrischen Ausgestaltungen für derartige Fahrzeugaufbauten problemlos realisieren, wobei der polymere Werkstoff aus der Gruppe der Polyolefine, Polystyrole, Styrol-Copolymere, Polyvinylchloride, Polycarbonate, Polyester, Polyamide, Ethylenvinylacetate und dergleichen ausgewählt ist.
Es liegt jedoch auch im Rahmen der Erfindung, dass der polymere Werkstoff ausgewählt ist aus der Gruppe der Silikonkautschuke bzw. aus der Gruppe der Natur- und/oder Synthesekautschuke.
In einer weiteren vorteilhaften Ausgestaltung ist das Dichtelement und/oder das Halteelement aus einem vernetzbaren Werkstoff hergestellt.

Weiterhin vorteilhaft wird gesehen, dass das Dichtelement und/oder das Halteelement aus einem metallischen Werkstoff hergestellt ist. Dieser metallische Werkstoff ist ausgewählt aus der Gruppe der Stähle, der Edelstähle, der Leichtmetalle und dergleichen und erhöht neben der abdichtenden Wirkung gleichzeitig die Stabilität und verbessert die Optik des erfindungsgemäßen Fahrzeugaufbaus.
Es liegt jedoch auch im Rahmen der Erfindung, dass das Dichtelement und/oder das Halteelement aus einem polymeren und einem metallischen Werkstoff hergestellt ist.

Die Erfindung soll nun an diesen nicht einschränkenden Ausführungsbeispielen näher beschrieben werden.
Es zeigen:
- Figur 1: Schnittdarstellung des erfindungsgemäßen Fahrzeugaufbaus
- Figur 2: Schnittdarstellung eines weiteren erfindungsgemäßen Fahrzeugaufbaus
- Figur 3: Schnittdarstellung eines Dichtelementes des erfindungsgemäßen Fahrzeugaufbaus

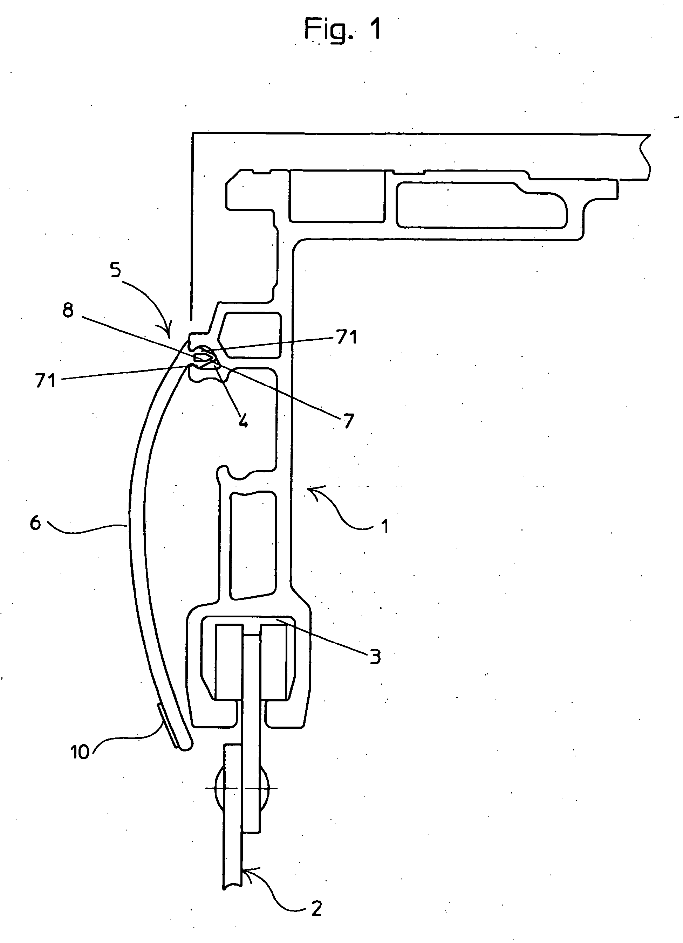

In Figur 1 ist ein Fahrzeugaufbau mit in Fahrzeuglängsrichtung verschieblichen Wandungen, insbesondere als Planen und dergleichen ausgebildeten Längsseitenwandungen 2, die an aus einem Hohlprofil und an dieses angeschlossenen Laufschienenprofilen 3 sowie an dieses angeordneten Dichtelementen 6 gebildeten oberen Längsgurten 1 des Fahrzeugaufbaus angeordnet sind, wobei wenigstens ein in Bezug auf die Fahrzeugmitte außen liegender Bereich 5 des Längsgurtes 1 wenigstens eine schlitzförmig geöffnete Längsausnehmung 4 aufweist. Der Längsgurt 1 ist etwa L-förmig ausgebildet und weist verschiedene Hohlkammern bzw. Längsausnehmungen auf.
In der schlitzförmigen Längsausnehmung 4, welche sich im in Bezug auf die Fahrzeugmitte außen liegenden Bereich 5 des Längsgurtes 1 befindet, ist ein Dichtelement 6 angeordnet. Das Dichtelement 6 weist in diesem Ausführungsbeispiel ein über die gesamte Länge angeordnetes Halteelement 7 auf, welches orthogonal zur Fahrzeuglängsachse kraftschlüssig in die Längsausnehmung 4 eingebracht und das Dichtelement 6 orthogonal lösbar am Längsgurt 1 angeordnet ist. Das Halteelement 7 ist in diesem Ausführungsbeispiel in etwa einem rechten Winkel zum Dichtelement 6 angeordnet und weist zwei einander gegenüberliegenden Rastelemente 71 auf. Das Halteelement 7 weist in diesem Ausführungsbeispiel eine Hohlkammer 8 auf, die etwa zentral und prismatisch in diesen angeordnet ist. Durch die Hohlkammer 8 des Halteelementes 7 ist es problemlos möglich, das Dichtelement 6 in die schlitzförmige Längsausnehmung 4 einzubringen. Die Längsausnehmung 4 ist in diesem Ausführungsbeispiel horizontal und orthogonal zur Fahrzeuglängsrichtung angeordnet. Das Dichtelement 6 ist in diesem Ausführungsbeispiel konvex ausgebildet und überdeckt sowohl den Längsgurt 1 als auch die über Rollen in den Laufschienenprofilen 3 befestigten Längsseitenwandungen 2, welche in diesem Ausführungsbeispiel als Planen ausgebildet sind. Das Dichtelement 6 weist auf seiner dem Halteelement 7 gegenüberliegend angeordneten Seite ein Dekorelement 10 auf, welches im unteren Bereich über die gesamte Länge als Reflektorstreifen ausgebildet ist.

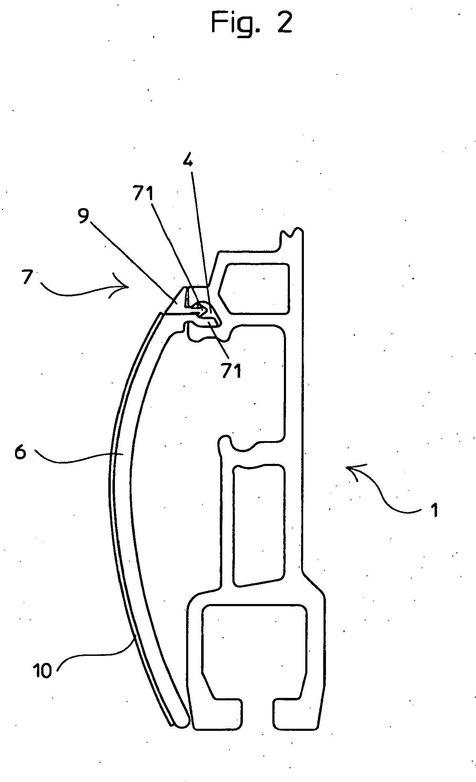

In Figur 2 ist ein weiterer erfindungsgemäßer Fahrzeugaufbau abgebildet, wobei der Längsgurt 1 nur abschnittsweise gestrichelt dargestellt ist. Der Längsgurt 1 weist wenigstens einen in Bezug auf die Fahrzeugmitte außen liegenden Bereich auf, in dem eine schlitzförmig geöffnete Längsausnehmung 4 angeordnet ist. Ein etwa konvex ausgebildetes Dichtelement 6 ist über wenigstens ein als Rastelement 71 ausgebildetes Halteelement 7 in der Längsausnehmung 4 des Längsgurtes 1 eingebracht. Das Halteelement 7 des Dichtelementes 6 besteht in diesem Ausführungsbeispiel aus zwei voneinander beabstandet angeordneten Rastelementen 71. Zur optimalen Fixierung des Dichtelementes 6 in der Längsausnehmung 4 des Längsgurtes 1 ist ein weiteres Rastelement 9 am Halteelement 7 angeordnet. Dieses Rastelement 9 besteht in diesem Ausführungsbeispiel aus polymeren Werkstoff, der das aus einem metallischen Werkstoff bestehende Dichtelement 6 orthogonal zur Fahrzeuglängsrichtung kraftschlüssig in der Längsausnehmung 4 des Längsgurtes 1 fixiert.
Das Dichtelement 6 weist in diesem Beispiel eine über seine gesamte, dem Halteelement 7 gegenüberliegende, Fläche ein Dekorelement 10 auf, welches durch eine an sich bekannte Bedruckung, Kaschierung, Folienkaschierung und dergleichen aufbringbar ist. Durch diese zusätzliche optische Gestaltung des Dichtelementes 6 können kundenspezifische bzw. sicherheitsrelevante Designs kostengünstig und wirtschaftlich am Fahrzeugaufbau angebracht werden.

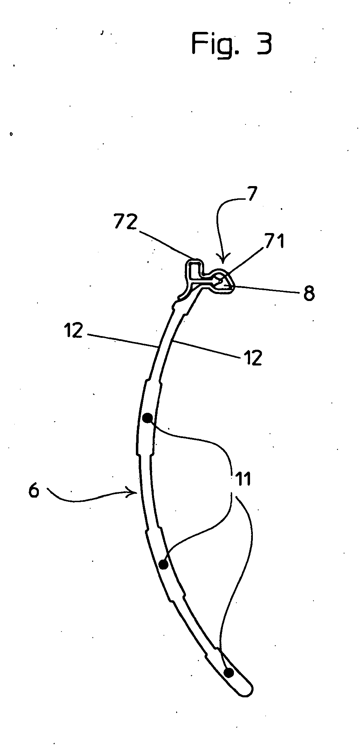

In Figur 3 ist eine weitere Schnittdarstellung durch ein Dichtelement 6 des erfindungsgemäßen Fahrzeugaufbaus dargestellt. Das Dichtelement 6 weist in diesem Ausführungsbeispiel eine über seinen Querschnitt unterschiedliche Wandstärke auf. Das Halteelement 7 ist in diesem Ausführungsbeispiel durch einen, eine Hohlkammer 8 bildenden, Steg 72 gebildet, an dem ein Rastelement 71 angeordnet ist. Das Dichtelement 6 wird in der hier nicht dargestellten Längsausnehmung 4 des Längsgurtes 1 über den Steg 72 vormontiert, während die Endmontage durch das horizontale Einschieben des Rastelementes 71 in die durch den Steg 72 gebildete Hohlkammer 8 erfolgt. Das Dichtelement 6 ist in diesem Ausführungsbeispiel aus einem polymeren Werkstoff hergestellt, der ausgewählt ist beispielsweise aus der Gruppe der Polyvinylchloride. Zur besseren Stabilisierung sowohl der mechanischen als auch der thermischen Eigenschaften weist das Dichtmittel 6 in seinem Inneren wenigstens ein in Längsrichtung eingebrachtes Verstärkungsmittel 11 auf, welches beispielsweise als Glasfasern, metallische Fasern und dergleichen ausgebildet sein kann.
An der Außenkontur des Dichtelementes 6 sind Materialausnehmungen 12 angeordnet, welche den Materialbedarf und damit den Preis des Dichtelementes 6, bei gleich bleibender Festigkeit, bedingt durch die Verstärkungsmittel 11, entsprechend positiv beeinflussen.

Das Halteelement 7 des Dichtelementes 6 ist in diesem Ausführungsbeispiel in etwa einem rechten Winkel zum Dichtelement 6 angeordnet, so dass es in hier nicht dargestellten horizontale, im Einbauzustand nach außen weisende, Längsausnehmungen 4 des Längsgurtes 1 einbringbar ist.
Es liegt jedoch auch im Rahmen der Erfindung, das Halteelement 7 so auszubilden, dass es in horizontal angeordnete, hier nicht dargestellte, Längsausnehmungen 4 des Längsgurtes 1 einbringbar ist, die im Einbauzustand parallel zur Fahrzeuglängsrichtung nach unten bzw. nach oben weisend ausgebildet sind.

Das Dichtelement 6 weist somit wenigstens abschnittsweise ein Halteelement 7 auf, welches orthogonal zur Fahrzeuglängsrichtung kraftschlüssig in die Längsausnehmung 4 einbringbar und das Dichtelement 6 orthogonal lösbar am Längsgurt 1 anordenbar ist. Die Längsausnehmung 4 kann dabei parallel zur Fahrzeuglängsrichtung ausgebildet sein, so dass das Dichtelement 6 in eine etwa parallel zu den Laufschienenprofilen 3 angeordnete hier nicht dargestellte Längsausnehmung 4 einbringbar ist.

## Patentansprüche

1. Fahrzeugaufbau mit in Fahrzeuglängsrichtung verschieblichen Wandungen, insbesondere als Planen und dergleichen ausgebildeten Längsseitenwandungen (2), die an aus einem Hohlprofil und an dieses angeschlossenen Laufschienenprofilen (3), sowie an dieses angeordneten Dichtelementen (6) gebildeten oberen Längsgurten (1) des Fahrzeugaufbaus angeordnet sind, wobei wenigstens ein in Bezug auf die Fahrzeugmitte außen liegender Bereich (5) des Längsgurtes (1) wenigstens eine schlitzförmig geöffnete Längsausnehmung (4) aufweist,
**dadurch gekennzeichnet, dass** das Dichtelement (6) wenigstens abschnittsweise ein Halteelement (7) aufweist, welches orthogonal zur Fahrzeuglängsrichtung kraftschlüssig in die Längsausnehmung (4) eingebracht und das Dichtelement (6) orthogonal lösbar am Längsgurt (1) angeordnet ist.

2. Fahrzeugaufbau nach Anspruch 1, **dadurch gekennzeichnet, dass** das Halteelement (7) an der dem Längsgurt (1) gegenüberliegenden Seite des Dichtelementes (6) angeordnet ist.

3. Fahrzeugaufbau nach einem der vorhergehenden Ansprüche, **dadurch gekennzeichnet, dass** das Halteelement (7) einstückig mit dem Dichtelement (6) verbunden ist.

4. Fahrzeugaufbau nach einem der vorhergehenden Ansprüche, **dadurch gekennzeichnet, dass** das Halteelement (6) stoffschlüssig mit dem Dichtelement (6) verbunden ist.

5. Fahrzeugaufbau nach einem der vorhergehenden Ansprüche, **dadurch gekennzeichnet, dass das** Halteelement (7) kraftschlüssig lösbar mit dem Dichtelement (6) verbunden ist.

6. Fahrzeugaufbau nach einem der vorhergehenden Ansprüche, **dadurch gekennzeichnet, dass** das Halteelement (7) in etwa einem rechten Winkel zum Dichtelement (6) angeordnet ist.

7. Fahrzeugaufbau nach einem der vorhergehenden Ansprüche, **dadurch gekennzeichnet, dass** das Halteelement (7) in einem Winkel von etwa 1 bis 20 Grad, vorzugsweise 1 bis 8 Grad am Dichtelement (6) angeordnet ist.

8. Fahrzeugaufbau nach einem der vorhergehenden Ansprüche, **dadurch gekennzeichnet, dass** das Halteelement (7) wenigstens ein Rastelement (71) aufweist.

9. Fahrzeugaufbau nach einem der vorhergehenden Ansprüche, **dadurch gekennzeichnet, dass** das Halteelement (7) wenigstens eine Hohlkammer (8) aufweist.

10. Fahrzeugaufbau nach einem der vorhergehenden Ansprüche, **dadurch gekennzeichnet, dass** das Halteelement (7) wenigstens zwei voneinander beabstandet angeordnete Rastelemente (71, 9) aufweist.

11. Fahrzeugaufbau nach einem der vorhergehenden Ansprüche, **dadurch gekennzeichnet, dass** das Halteelement (7) und/oder das Dichtelement (6) wenigstens ein Verstärkungselement (11) aufweist.

12. Fahrzeugaufbau nach einem der vorhergehenden Ansprüche, **dadurch gekennzeichnet, dass** das Dichtelement (6) eine über seinen Querschnitt etwa konstante Wandstärke aufweist.

13. Fahrzeugaufbau nach einem der vorhergehenden Ansprüche, **dadurch gekennzeichnet, dass** das Dichtelement (6) eine etwa konkave und/oder konvexe Außenkontur aufweist.

14. Fahrzeugaufbau nach einem der vorhergehenden Ansprüche, **dadurch gekennzeichnet, dass** das Dichtelement (6) wenigstens abschnittsweise ein Dekorelement (10) aufweist.

15. Fahrzeugaufbau nach Anspruch 14, **dadurch gekennzeichnet, dass** das Dekorelement (10) auf der dem Halteelement (7) gegenüberliegenden Seite des Dichtelementes (6) angeordnet ist.

16. Fahrzeugaufbau nach einem der vorhergehenden Ansprüche, **dadurch gekennzeichnet, dass d**as Dekorelement (10) durch eine an sich bekannte Bedruckung, Lackierung, Folienkaschierung aufbringbar ist.

17. Fahrzeugaufbau nach einem der vorhergehenden Ansprüche, **dadurch gekennzeichnet, dass** das Dekorelement (10) als Reflektorstreifen, Leuchtelement, fluoreszierendes Element und dergleichen ausgebildet ist.

18. Fahrzeugaufbau nach einem der vorhergehenden Ansprüche, **dadurch gekennzeichnet, dass** das Dichtelement (6) und/oder das Halteelement (7) aus einem polymeren Werkstoff hergestellt ist.

19. Fahrzeugaufbau nach einem der vorhergehenden Ansprüche, **dadurch gekennzeichnet, dass** das Dichtelement (6) und/oder das Halteelement (7) aus einem vernetzbaren Werkstoff besteht.

20. Fahrzeugaufbau nach Anspruch 18 bis 19, **dadurch gekennzeichnet, dass** der polymere Werkstoff ausgewählt ist aus der Gruppe der Polyolefine, Polystyrole, Styrol-Copolymere, Polyvinylchloride, Polycarbonate, Polyester, Polyamide, Ethylenvinylacetate und dergleichen.

21. Fahrzeugaufbau nach Anspruch 18 bis 19, **dadurch gekennzeichnet, dass** der polymere Werkstoff ausgewählt ist aus der Gruppe der Silikonkautschuke.

22. Fahrzeugaufbau nach Anspruch 18 bis 19, **dadurch gekennzeichnet, dass** der polymere Werkstoff ausgewählt ist aus der Gruppe der Natur- und/ oder Synthesekautschuke.

23. Fahrzeugaufbau nach Anspruch 1 bis 17, **dadurch gekennzeichnet, dass** das Dichtelement (6) und/oder das Halteelement (7) aus einem metallischen Werkstoff hergestellt ist.

24. Fahrzeugaufbau nach Anspruch 23, **dadurch gekennzeichnet, dass** der metallische Werkstoff ausgewählt ist aus der Gruppe der Stähle, der Edelstähle, der Leichtmetalle und dergleichen.

25. Fahrzeugaufbau nach einem der vorhergehenden Ansprüche, **dadurch gekennzeichnet, dass** das Dichtelement (6) und/oder das Halteelement (7) aus einem polymeren und einem metallischen Werkstoff hergestellt ist.

## Claims

1. Vehicle body having walls which are movable in the longitudinal direction, in particular longitudinal side walls (2) of planar and similar form, which are arranged on upper longitudinal flanges (1) of the vehicle body, said upper longitudinal flanges being formed from a hollow profile, running rail profiles (3) connected to said hollow profile and sealing elements (6) arranged on said hollow profile, with at least one region (5), which is situated to the outside in relation to the vehicle centre, of the longitudinal flange (1) having at least one longitudinal recess (4) open in the form of a slot,
**characterized in that** the sealing element (6), at least in sections, has a retaining element (7) which is inserted in a non-positively locking fashion into the longitudinal recess (4) orthogonally with respect to the vehicle longitudinal direction, and the sealing element (6) is arranged on the longitudinal flange (1) in an orthogonally detachable manner.

2. Vehicle body according to Claim 1, **characterized in that** the retaining element (7) is arranged on that side of the sealing element (6) which faces towards the longitudinal flange (1).

3. Vehicle body according to one of the preceding claims, **characterized in that** the retaining element (7) is integrally connected to the sealing element (6).

4. Vehicle body according to one of the preceding claims, **characterized in that** the retaining element (7) is cohesively connected to the sealing element (6).

5. Vehicle body according to one of the preceding claims, **characterized in that** the retaining element (7) is detachably connected in a non-positively locking manner to the sealing element (6).

6. Vehicle body according to one of the preceding claims, **characterized in that** the retaining element (7) is arranged approximately at right angles to the sealing element (6).

7. Vehicle body according to one of the preceding claims, **characterized in that** the retaining element (7) is arranged at an angle of approximately 1 to 20 degrees, preferably 1 to 8 degrees, on the sealing element (6).

8. Vehicle body according to one of the preceding claims, **characterized in that** the retaining element (7) has at least one latching element (71).

9. Vehicle body according to one of the preceding claims, **characterized in that** the retaining element (7) has at least one hollow chamber (8).

10. Vehicle body according to one of the preceding claims, **characterized in that** the retaining element (7) has at least two latching elements (71, 9) arranged spaced apart from one another.

11. Vehicle body according to one of the preceding claims, **characterized in that** the retaining element (7) and/or the sealing element (6) have/has at least one reinforcement element (11).

12. Vehicle body according to one of the preceding claims, **characterized in that** the sealing element (6) has an approximately constant wall thickness over its cross section.

13. Vehicle body according to one of the preceding claims, **characterized in that** the sealing element (6) has an approximately concave and/or convex outer contour.

14. Vehicle body according to one of the preceding claims, **characterized in that** the sealing element (6) has a decorative element (10) at least in sections.

15. Vehicle body according to Claim 14, **characterized in that** the decorative element (10) is arranged on that side of the sealing element (6) which is opposite the retaining element (7).

16. Vehicle body according to one of the preceding claims, **characterized in that** the decorative element (10) can be applied by means of a printing, lacquering or film laminating process which is known per se.

17. Vehicle body according to one of the preceding claims, **characterized in that** the decorative element (10) is designed as a reflective strip, lighting element, fluorescent element and the like.

18. Vehicle body according to one of the preceding claims, **characterized in that** the sealing element (6) and/or the retaining element (7) are/is produced from a polymer material.

19. Vehicle body according to one of the preceding claims, **characterized in that** the sealing element (6) and/or the retaining element (7) are/is composed of a wettable material.

20. Vehicle body according to Claim 18 to 19, **characterized in that** the polymer material is selected from the group consisting of polyolefins, polystyrenes, styrol copolymers, polyvinyl chlorides, polycarbonates, polyesters, polyamides, ethylene vinyl acetates and the like.

21. Vehicle body according to Claim 18 to 19, **characterized in that** the polymer material is selected from the group consisting of silicone rubbers.

22. Vehicle body according to Claim 18 to 19, **characterized in that** the polymer material is selected from the group consisting of natural and/or synthetic rubbers.

23. Vehicle body according to Claim 1 to 17, **characterized in that** the sealing element (6) and/or the retaining element (7) are/is produced from a metallic material.

24. Vehicle body according to Claim 23, **characterized in that** the metallic material is selected from the group consisting of steels, high-grade steels, light metals and the like.

25. Vehicle body according to one of the preceding claims, **characterized in that** the sealing element (6) and/or the retaining element (7) are/is produced from a polymer material and a metallic material.

## Revendications

1. Structure de véhicule comprenant des parois mobiles dans la direction longitudinale du véhicule, notamment des parois latérales longitudinales (2) réalisées sous forme de bâches et similaires, qui sont disposées sur des sangles longitudinales supérieures (1) de la structure de véhicule, formées d'un profilé creux et de profilés de rails de roulement (3) raccordés à celui-ci, ainsi que d'éléments d'étanchéité (6) disposés sur celui-ci, au moins une région (5) de la sangle longitudinale (1) située à l'extérieur par rapport au centre du véhicule présentant au moins un évidement longitudinal (4) ouvert en forme de fente,
**caractérisée en ce que** l'élément d'étanchéité (6) présente au moins en partie un élément de retenue (7) qui est monté perpendiculairement à la direction longitudinale du véhicule par engagement par force dans l'évidement longitudinal (4) et l'élément d'étanchéité (6) est disposé perpendiculairement et de manière détachable sur la sangle longitudinale (1).

2. Structure de véhicule selon la revendication 1, **caractérisée en ce que** l'élément de retenue (7) est disposé sur le côté de l'élément d'étanchéité (6) opposé à la sangle longitudinale (1).

3. Structure de véhicule selon l'une quelconque des revendications précédentes, **caractérisée en ce que** l'élément de retenue (7) est connecté d'une seule pièce à l'élément d'étanchéité (6).

4. Structure de véhicule selon l'une quelconque des revendications précédentes, **caractérisée en ce que** l'élément de retenue (7) est connecté par engagement par liaison de matière à l'élément d'étanchéité (6).

5. Structure de véhicule selon l'une quelconque des revendications précédentes, **caractérisée en ce que** l'élément de retenue (7) est connecté par engagement par force et de manière détachable à l'élément d'étanchéité (6).

6. Structure de véhicule selon l'une quelconque des revendications précédentes, **caractérisée en ce que** l'élément de retenue (7) est disposé approximativement à angle droit par rapport à l'élément d'étanchéité (6).

7. Structure de véhicule selon l'une quelconque des revendications précédentes, **caractérisée en ce que** l'élément de retenue (7) est disposé suivant un angle d'environ 1 à 20 degrés, de préférence de 1 à 8 degrés sur l'élément d'étanchéité (6).

8. Structure de véhicule selon l'une quelconque des revendications précédentes, **caractérisée en ce que** l'élément de retenue (7) présente au moins un élément d'encliquetage (71).

9. Structure de véhicule selon l'une quelconque des revendications précédentes, **caractérisée en ce que** l'élément de retenue (7) présente au moins une cavité (8).

10. Structure de véhicule selon l'une quelconque des revendications précédentes, **caractérisée en ce que** l'élément de retenue (7) présente au moins deux éléments d'encliquetage (71, 9) espacés l'un de l'autre.

11. Structure de véhicule selon l'une quelconque des revendications précédentes, **caractérisée en ce que** l'élément de retenue (7) et/ou l'élément d'étanchéité (6) présentent au moins un élément de renfort (11).

12. Structure de véhicule selon l'une quelconque des revendications précédentes, **caractérisée en ce que** l'élément d'étanchéité (6) présente une épaisseur de paroi approximativement constante sur sa section transversale.

13. Structure de véhicule selon l'une quelconque des revendications précédentes, **caractérisée en ce que** l'élément d'étanchéité (6) présente un contour extérieur approximativement concave et/ou convexe.

14. Structure de véhicule selon l'une quelconque des revendications précédentes, **caractérisée en ce que** l'élément d'étanchéité (6) présente au moins en partie un élément décoratif (10).

15. Structure de véhicule selon la revendication 14, **caractérisée en ce que** l'élément décoratif (10) est disposé sur le côté de l'élément d'étanchéité (6) opposé à l'élément de retenue (7).

16. Structure de véhicule selon l'une quelconque des revendications précédentes, **caractérisée en ce que** l'élément décoratif (10) peut être appliqué par une impression connue en soi, un laquage, ou un contrecollage de feuilles.

17. Structure de véhicule selon l'une quelconque des revendications précédentes, **caractérisée en ce que** l'élément décoratif (10) est réalisé sous forme de bandes réfléchissantes, d'élément d'éclairage, d'élément fluorescent et similaires.

18. Structure de véhicule selon l'une quelconque des revendications précédentes, **caractérisée en ce que** l'élément d'étanchéité (6) et/ou l'élément de retenue (7) sont fabriqués en un matériau polymère.

19. Structure de véhicule selon l'une quelconque des revendications précédentes, **caractérisée en ce que** l'élément d'étanchéité (6) et/ou l'élément de retenue (7) se composent d'un matériau réticulable.

20. Structure de véhicule selon les revendications 18 et 19, **caractérisée en ce que** le matériau polymère est choisi parmi le groupe des polyoléfines, des polystyrènes, des copolymères de styrène, des polyvinylchlorures, des polycarbonates, des polyesters, des polyamides, des acétates d'éthylène-vinyle et similaires.

21. Structure de véhicule selon les revendications 18 et 19, **caractérisée en ce que** le matériau polymère est choisi parmi le groupe des caoutchoucs siliconés.

22. Structure de véhicule selon les revendications 18 et 19, **caractérisée en ce que** le matériau polymère est choisi parmi le groupe des caoutchoucs naturels et/ou synthétiques.

23. Structure de véhicule selon les revendications 1 à 17, **caractérisée en ce que** l'élément d'étanchéité (6) et/ou l'élément de retenue (7) sont fabriqués en un matériau métallique.

24. Structure de véhicule selon la revendication 23, **caractérisée en ce que** le matériau métallique est choisi parmi le groupe des aciers, des aciers nobles, des métaux légers et similaires.

25. Structure de véhicule selon l'une quelconque des revendications précédentes, **caractérisée en ce que** l'élément d'étanchéité (6) et/ou l'élément de retenue (7) sont fabriqués en un matériau polymère et en un matériau métallique.
